# EUROPÄISCHE PATENTSCHRIFT

(11) **EP 2 650 188 B1**
(45) Veröffentlichungstag und Bekanntmachung des Hinweises auf die Patenterteilung: **03.02.2016**
(21) Anmeldenummer: 13162205.2
(22) Anmeldetag: 03.04.2013
(51) Int. Cl.: B61D 33/00, B60N 2/06

(54) **Fahrgastsitzeinrichtung für Fahrzeuge, Schienenfahrzeug mit einer Fahrgastsitzeinrichtung und Verfahren zur Anpassung des Sitzplatzangebots eines Schienenfahrzeugs**
Passenger seat device for vehicles, railway vehicle with a passenger seat device and method for customizing the available seating space of a railway vehicle
Dispositif de siège passager pour véhicules, véhicules sur rails avec un dispositif de siège passager et procédé d'adaptation des sièges d'un véhicule sur rails

(30) Priorität: 12.04.2012 DE 102012103137
(43) Veröffentlichungstag der Anmeldung: 16.10.2013
(73) Patentinhaber: Bombardier Transportation GmbH, 10785 Berlin (DE)
(72) Erfinder: Siegemund, Thomas, 14167 Berlin (DE); Sohn, Michael, 16761 Hennigsdorf (DE)
(74) Vertreter: Zimmermann & Partner Patentanwälte mbB

(56) Entgegenhaltungen:
- EP-B1- 1 864 850
- DE-A1- 3 937 025
- DE-C1- 19 635 635
- FR-A1- 2 811 619
- KR-A- 20040 042 946
- US-A- 1 998 186
- US-B1- 7 334 839

## Beschreibung

### Technisches Gebiet

Die Erfindung liegt auf dem Gebiet der Fahrzeugtechnik und insbesondere der Schienenfahrzeugtechnik und betrifft eine Fahrgastsitzeinrichtung für Fahrzeuge, insbesondere Schienenfahrzeuge, sowie ein Schienenfahrzeug mit einer Fahrgastsitzeinrichtung. Weiterhin betrifft die Erfindung ein Verfahren zur Anpassung des Sitzplatzangebots eines Schienenfahrzeugs.

### Vorbekannter Stand der Technik

In der Gestaltung von Nahverkehrsschienenfahrzeugen wie U-Bahnen besteht ein prinzipieller Zielkonflikt zwischen hoher Sitzplatzkapazität auf der einen Seite und hoher Transportkapazität in Form von Stehplätzen auf der anderen Seite. Schienennahverkehrssysteme wie U-Bahnen haben im Tagesverlauf sehr unterschiedliche Anforderungen hinsichtlich der Fahrgastkapazität, die sich mit der Tageszeit und durch Ereignisse in kürzester Zeit ändern können. Diese Anforderungsänderung kann sich von Umlauf zu Umlauf als auch richtungsabhängig verändern. Im realen Fahrgastbetrieb kommt es daher zu erheblichen Schwankungen des Fahrgastaufkommens, abhängig von der Tageszeit, der Richtung, des Streckenabschnittes, von Ereignissen (z.B. Veranstaltungen), Witterungsbedingungen und sonstigen externen Einflussfaktoren. Diese sind können vorhersehbar und damit planbar sein oder sind nicht vorhersehbar.

In Fahrzeugen des öffentlichen Personennahverkehrs besteht daher bei der Konzeption der Fahrzeuginnenausstattung der Zielkonflikt zwischen Fahrgastkapazität oder Komfort. Fahrgäste haben auch bei kürzeren Reisezeiten den Wunsch nach Komfort, d.h. nach einem Sitzplatz, auf der anderen Seite aber auch den Wunsch nach ausreichender Kapazität der Fahrzeuge, um auch in Hochlastzeiten (Rushhour) mit dem Zug Ihrer Wahl mitgenommen zu werden. In diesem Fall dominiert der Wunsch nach Mitnahme vor dem Wunsch nach Komfort.

Die Fahrzeuge sind jedoch häufig mit einer fest vorgegebenen Bestuhlung ausgestattet, die in der Planungsphase auf Grund verschiedener Parameter festgelegt wird. Damit ist für ein gegebenes Fahrzeug das Verhältnis zwischen Sitzplätze und Stehplätze festgelegt, unabhängig von dem tatsächlichen Fahrgastaufkommen während des Betriebes. Diese Bestuhlung ist fest in das Fahrzeug eingebaut und kann nur mit erheblichem Umbauaufwand vom Betreiber verändert werden. Ausnahmen bilden Klappbestuhlungen in Mehrzweckabteilen.

Die häufig anzutreffende Querbestuhlung mit in der Regel jeweils 2 Sitzen beidseitig des Mittelganges behindert insbesondere bei hohem Fahrgastaufkommen den Fahrgastfluss und die Fahrgastverteilung während des Ein- und Aussteigevorgangs. Diese Behinderung wird insbesondere durch die unmittelbar an den Türbereichen liegenden Sitzreihen verursacht. Dies wirkt sich auf eine Verlängerung der Haltezeit aus, und es kann zu Verspätungen bei der Abfahrt führen.

Aus US 2010/0140996 A1 und DE 10 2008 060 747 A1 ist ein bedarfsweise bereitstellbarer Sitzes bekannt, der aus einer nach Art eines Rollos aus- und einrollbaren Materialbahn aus einem reißfesten, flexiblen Material gebildet wird. Dazu sind Rollen zwischen zwei voneinander beabstandeten Fahrzeugsitzen einer Sitzreihe vorgesehen, die sich an den Fahrzeugsitzen abstützen. Die Materialbahn ist an jedem ihrer gegenüberliegenden Längsenden aufrollbar an den Rollen befestigt.

Aus EP 1 864 850 B1 ist eine ausfahrbare Sitzeinheit für ein Transportfahrzeug bekannt. Die Sitzeinrichtung umfasst ein Hauptsitzunterteil und eine Hauptrückenlehne, die dafür vorgesehen sind, einen ersten Fahrgast zu halten. Die ausfahrbare Sitzeinheit umfasst weiterhin ein sekundäres Sitzunterteil und eine sekundäre Rückenlehne, die zwischen einer eingefahrenen Stellung, in der sie in Relation zu dem Hauptsitzunterteil und der Hauptrückenlehne verstaut sind, und einer ausgefahrenen Stellung bewegbar sind, in der sie neben dem Hauptsitzunterteil und der Hauptrückenlehne angeordnet sind, um einen zweiten Fahrgast zu halten. Das sekundäre Sitzunterteil und die sekundäre Rückenlehne werden in Relation zu dem Hauptsitzunterteil und der Hauptrückenlehne mittels einer seitlichen translatorischen Bewegung verfahren. Das sekundäre Sitzunterteil und die sekundäre Rückenlehne sind in ihrer eingefahrenen Stellung jeweils hinter dem Hauptsitzunterteil und der Hauptrückenlehne gelagert sind.

Aus FR 2 769 553 ist eine Sitzvorrichtung für Kraftfahrzeuge bekannt, bei der die Breite eines Sitzes veränderbar ist. Der Sitz wird aus einer Vielzahl von flexiblen, länglichen Elementen gebildet, die von einem Gerüst gestützt werden, welches dem Sitz die Form verleiht. Der Abstand der flexiblen Elemente untereinander sowie deren Durchmesser lassen sich verändern, so dass dadurch insgesamt die Breite des Sitzes anpassbar ist.

Aus FR 2 811 619 ist eine Sitzvorrichtung entsprechend den Merkmalen des Oberbegriffes des unabhängigen Anspruchs 1 bekannt.

### Nachteile des Standes der Technik

Die derzeitige Auslegung von Schienenfahrzeugen erlaubt keine Veränderung des Verhältnisses von Sitz- zu Stehplätzen. Lediglich fahrgastseitig ist es möglich, dafür vorgesehene Klappsitze zusätzlich zu nutzen. Zwar bieten die oben beschriebenen Ansätze eine gewisse Variabilität, jedoch sind diese häufig zu aufwendig.

### Problemstellung

Es ist daher Aufgabe der vorliegenden Erfindung, eine Fahrgastsitzeinrichtung bereitzustellen, die eine bedarfsweise und einfache Anpassung des Sitzplatzangebots ermöglicht und ausreichend zuverlässig und robust ist.

### Erfindungsgemäße Lösung

Diese Aufgabe wird durch eine Fahrgastsitzeinrichtung nach Anspruch 1 gelöst. Weiterhin wird diese Aufgabe durch ein Schienenfahrzeug nach Anspruch 11 sowie ein Verfahren zur Anpassung des Sitzplatzangebots eines Schienenfahrzeugs nach Anspruch 15 gelöst. Weitere Ausführungsformen, Modifikationen und Verbesserungen ergeben sich anhand der folgenden Beschreibung und gemäß den beigefügten Ansprüchen.

Gemäß einer Ausführungsform wird eine Fahrgastsitzeinrichtung für Fahrzeuge, insbesondere Schienenfahrzeuge, mit mindestens einem fest im Fahrzeug montierbaren ersten Sitz und mindestens einem relativ zum ersten Sitz bewegbaren zweiten Sitz, der mit dem ersten Sitz verbunden ist, bereitgestellt. Der zweite Sitz ist um eine etwa senkrecht verlaufende Schwenkachse relativ zum ersten Sitz zwischen einer ersten Position, in welcher der zweite Sitz im Bereich des ersten Sitzes, beispielsweise im, am oder unter dem ersten Sitz, verstaubar ist, und einer zweiten Position, in welcher der zweite Sitz zur Benutzung durch einen Fahrgast zur Verfügung steht, schwenkbar.

Durch insbesondere seitliches Schwenken kann bedarfsweise ein zweiter Sitz bereitgestellt werden. Das Schwenken hat, im Gegensatz zum beispielsweise lateralen Herausziehen, wie in der EP 1 864 850 B1 beschrieben, den Vorteil, dass es einfacher und robuster ist. Das seitliche Verschwenken erfolgt typischerweise um einen Winkel von etwa 90°.

Die hier vorgestellte Lösung gestattet weiterhin, dass eine Anpassung des Sitzplatzangebots auf kontrollierte Art und Weise erfolgen kann, beispielsweise durch zentrale Steuerung. Dadurch wird eine zeitnahe und gesteuerte Veränderung des Verhältnisses von Sitz- zu Stehplätzen ermöglicht, beispielsweise während des Betriebs der Fahrzeuge, z.B. während der Wendung der Züge in den Kehranlagen oder Endstationen, wenn kurzfristig keine Fahrgäste im Fahrzeug sind.

Insbesondere für eine zentrale Steuerung der Sitzplatzeinrichtungen kann diese gemäß einer Ausführungsform ein Antriebsmittel umfassen, um den zweiten Sitz zwischen der ersten und zweiten Position hin- und her zu bewegen. Das Antriebsmittel, beispielsweise ein Pneumatikantrieb oder ein Elektromotor, lässt sich zentral ansteuern. Es ist weiterhin möglich, dass die Steuerung lokal erfolgt, beispielsweise über entsprechende Schalter, die ggf. zentral freigegeben werden können.

Damit kann im Gegensatz zu bisherigen Lösungen das Sitzplatzangebot nicht nur durch den Fahrgast selbst, beispielsweise durch Nutzung eines Klappsitzes, sondern zentral angepasst werden. Das Sitzplatzangebot kann daher von Seiten des Betreibers unmittelbar kontrolliert werden. Dies ist insbesondere dann von Vorteil, wenn der Betreiber des Fahrzeugs das Sitzplatzangebot bewusst begrenzen will, um beispielsweise in Stoßzeiten die Gesamtkapazität des Fahrzeugs zu erhöhen und damit dem Fahrgastwunsch nach zügiger Mitnahme gerecht zu werden.

Somit lässt sich in Schwachlastzeiten mit geringerem Fahrgastaufkommen die Anzahl der angebotenen Sitzplätze maximieren, während in Spitzlastzeiten ein Maximum von Stehplätzen seitens des Betreibers angeboten werden kann.

Darüber hinaus lässt sich der Fahrgastfluss im Fahrzeug, beispielsweise die Erreichbarkeit bestimmter Bereiche, beeinflussen, z.B. in dem nur in bestimmten Bereichen im Fahrzeug das Sitzplatzangebot variiert wird, in anderen dagegen nicht.

Gemäß einer Ausführungsform umfasst der zweite Sitz eine Sitzfläche, welche in ihrer Ebene um die Schwenkachse ein- und ausschwenkbar ist, wobei die Sitzfläche des zweiten Sitzes bevorzugt die Form eines Viertelkreises aufweist. Diese Lösung ist insbesondere platzsparend und sehr robust und eignet sich sehr gut als Schwenklösung. Durch die optionale viertelkreisförmige Form hat der Fahrgast, welcher den zweiten Sitz nutzt, auch eine größere Freiheit hinsichtlich seiner Sitzposition.

Gemäß einer Ausführungsform verfügt der erste Sitz über eine Armlehne, die zusammen mit der Sitzfläche des zweiten Sitzes verschwenkbar ist, wobei die Armlehne die Funktion einer Rückenlehne des zweiten Sitzes übernimmt, wenn die Sitzfläche des zweiten Sitzes ausgeschwenkt ist. Wenn sich der zweite Sitz in seiner ersten Position befindet, in welcher er verstaut ist, ist die Armlehne dem ersten Sitz zugeordnet. Die Armlehne kann zusammen mit der Sitzfläche des zweiten Sitzes verschwenkt werden und bildet dann für den zweiten Sitz eine Rückenlehne. Damit wird der Komfort verbessert.

Gemäß einer Ausführungsform ist der zweite Sitz in der ersten Position unterhalb des ersten Sitzes, im ersten Sitz oder am ersten Sitz, eingeschwenkt. Damit kann der zweite Sitz besonders platzsparend verstaut werden.

Gemäß einer Ausführungsform ist die Schwenkachse seitlich der Rückenlehne des ersten Sitzes angeordnet. Die Schwenkachse kann in tragende Strukturen der Fahrgastsitzeinrichtung integriert werden.

Gemäß einer Ausführungsform stützt sich die Schwenkachse im eingebauten Zustand der Fahrgastsitzeinrichtung am Boden des Schienenfahrzeugs ab, um die tragenden Lasten besser aufnehmen zu können. Es ist jedoch auch möglich, dass sich die Schwenkachse auf tragenden Strukturen der Fahrgastsitzeinrichtung abstützt.

Gemäß einer Ausführungsform bietet die Sitzfläche des zweiten Sitzes in der zweiten Position eine tiefere Sitzposition als die Sitzfläche des ersten Sitzes. Dies ist insbesondere dann der Fall, wenn die Sitzfläche des zweiten Sitzes unterhalb der Sitzfläche des ersten Sitzes verstaut werden kann. Zwischen den beiden Sitzflächen ist dann eine Stufe ausgebildet.

Gemäß einer Ausführungsform weist der zweite Sitz einen fächerartigen Aufbau auf, sodass dessen Sitzfläche in der zweiten Position von der aufgespannten fächerartigen Konstruktion gebildet wird. Diese Lösung ist besonders platzsparend, da hier die Sitzfläche quasi im "zusammengefalteten" Zustand verstaut werden kann. Damit lässt sich auch eine Gewichtseinsparung erzielen.

Gemäß einer Ausführungsform weist die fächerartige Konstruktion eine Vielzahl von Fächerstäben, die um die Schwenkachse schwenkbar sind, und ein flexibles, insbesondere textiles, Material auf, das von den in die zweite Position ausgeschwenkten Fächerstäben zur Bildung der Sitzfläche des zweiten Sitzes aufgespannt wird. Zur Bildung der Sitzfläche wird ein flexibles und insbesondere faltbares Material verwendet. Dieses sollte ausreichend reißfest sein, um den Anforderungen während der Nutzung zu genügen. Textile Materialien sind beispielsweise gut geeignet.

Gemäß einer Ausführungsform wird ein Schienenfahrzeug vorgeschlagen, das mindestens eine der hierin beschriebenen Fahrgastsitzeinrichtungen umfasst, die mit ihrem ersten Sitz fest im Schienenfahrzeug montiert ist.

Gemäß einer Ausführungsform weist das Schienenfahrzeug mehrere Fahrgastsitzeinrichtungen auf, die so im Schienenfahrzeug montiert sind, dass sie Sitzpositionen quer zur Längsrichtung des Schienenfahrzeugs ermöglichen, wobei die zweiten Sitzplätze der Fahrgastsitzeinrichtungen jeweils zur Mitte des Schienenfahrzeugs ausschwenkbar sind. Damit ist insbesondere der in der Wagenmitte entlang der Mittelachse des Schienenfahrzeugs zur Verfügung stehende Raum an die jeweilige Verkehrssituation anpassbar.

Gemäß einer Ausführungsform sind die Fahrgastsitzeinrichtungen benachbart zu Zugangstüren des Schienenfahrzeugs angeordnet, wobei das Schienenfahrzeug optional weitere Fahrgastsitzeinrichtungen aufweist, die zwei starr miteinander verbundene Sitzplätze aufweisen und von den Zugangstüren entfernt angeordnet sind. Bei dieser Ausführungsform kann die Größe des Zugangsbereichs variiert werden, in dem bedarfsweise die zweiten Sitzplätze ein- oder ausgeschwenkt werden. Durch das gezielte Ein- oder Ausschwenken der gangseitigen Sitze unmittelbar am Türbereich kann insbesondere bei hohem Fahrgastaufkommen, der Fahrgastfluß durch Einfahren der zur Wagenmitte weisenden Sitze günstig beeinflußt werden. Außerdem wird der Zugangsbereich vergrößert und damit das Ein- und Aussteigen verbessert.

Gemäß einer Ausführungsform wird ein Verfahren zur Anpassung des Sitzplatzangebots eines Schienenfahrzeugs bereitgestellt, wobei durch ein vom Fahrer des Schienenfahrzeugs oder von einer Leitstelle ausgegebenes Signal alle oder nur ein Teil der zweiten Sitze der Fahrgastsitzeinrichtungen von der ersten in die zweite Position oder von der zweiten in die erste Position zur Anpassung des Sitzplatzangebots verschwenkt werden. Gemäß einer Ausführungsform sind die Antriebsmittel der Fahrgastsitzeinrichtungen daher zentral ansteuerbar.

Gemäß einer Ausführungsform weist das Schienenfahrzeug eine zentral bedienbare Steuereinrichtung auf, welche Steuersignale empfängt und die Antriebsmittel der Fahrgastsitzeinrichtungen einzeln, in Gruppen, oder zusammen ansteuert. Das Schienenfahrzeug kann weiterhin ein oder mehrere Überwachungsmittel aufweisen, um die Personenfreiheit im Bereich der Fahrgastsitzeinrichtungen zu überwachen, damit ein versehentliches Betätigen der Fahrgastsitzeinrichtungen ausgeschlossen wird. Ein Überwachungsmittel kann beispielsweise eine Videokamera sein.

Mit diesem Ansatz wird in einer durch den Betreiber des Schienenfahrzeugs kontrollierbaren Art der Zielkonflikt zwischen Komfort und Kapazität gelöst, und zwar unmittelbar und zeitnah entsprechend der Verkehrssituation, bzw. dem Fahrgastaufkommen. Insgesamt wird damit ein Betrag zur Erhöhung der Attraktivität des öffentlichen Personennahverkehrs geleistet.

Die Erfindung kann in Fahrzeugen wie z.B. Bus, Straßenbahnen, Stadtbahnen, U-Bahnen, S-Bahnen, Regionalzügen, sogenannten Peoplemovern und Monorailfahrzeugen angewendet werden. In Schwachlastzeiten kann mit dieser Erfindung den Fahrgästen ein höheres Sitzplatzangebot bereitgestellt werden. In Spitzenzeiten wird mit dieser Erfindung den Fahrgästen eine erhöhte Fahrgastkapazität in Form von zusätzlichen Stehplätzen angeboten. Die Wahrscheinlichkeit, dass Fahrgäste auf Grund eines vollen Zuges nicht mitgenommen werden können, vermindert sich erheblich.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.

Figuren 1A bis 1C zeigen eine Fahrgastsitzeinrichtung gemäß einer Ausführungsform der Erfindung.

Figuren 2A und 2B zeigen eine Fahrgastsitzeinrichtung gemäß einer Ausführungsform der Erfindung.

Figur 3 zeigt eine schematische Ansicht eines Fahrgastraums eines Schienenfahrzeugs, welches mit Fahrgastsitzeinrichtungen ausgerüstet ist.

Figuren 4A bis 4C zeigen eine Fahrgastsitzeinrichtung gemäß einer weiteren Ausführungsform der Erfindung.

Figuren 5A bis 5D zeigen einzelne Phasen beim Ein- und Ausschwenken der Sitzfläche des zweiten Sitzes gemäß einer Ausführungsform der Erfindung.

### Ausführungsbeispiele

Nachfolgend werden Fahrgastsitzeinrichtungen verschiedener Ausführungsformen beschrieben, bei der durch ein Steuerkommando des Fahrers oder der Leitstelle, eine zusätzliche Sitzfläche entsprechend der Verkehrssituation ein- oder ausgefahren werden kann. Damit besteht die Möglichkeit der kontrollierten Veränderung des Sitz- zu Stehverhältnisses. Die Veränderung dieses Verhältnisses erfolgt kontrolliert beispielsweise während der Wendung des Fahrzeuges wenn das Fahrzeug leer ist.

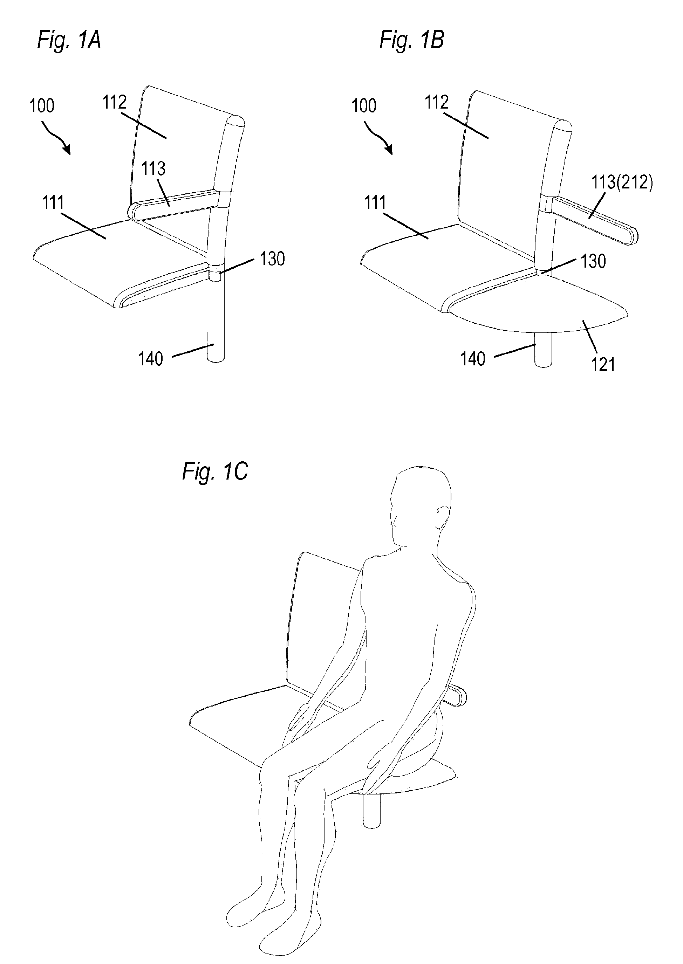

Figuren 1A bis 1C zeigen eine Fahrgastsitzeinrichtung 100 mit einem ersten Sitz, der über eine feststehende Sitzfläche 111 und eine Rückenlehne 112 verfügt. Die Fahrgastsitzeinrichtung 100 ist mit einer zusätzlichen festen aber bewegbaren Sitzfläche 121 ausgestattet, die durch eine rotierende Bewegung um eine Rotationsachse 130 am seitlichen Rand der festen Rückenlehne 112 ausfahrbar ist. Die ausgefahrene bzw. ausgeschwenkte Sitzfläche 121 ist dabei etwas unterhalb der festen Sitzfläche 111 des ersten Sitzes angeordnet, sodass sich eine Stufe zwischen beiden Sitzflächen 111, 121 bildet. Dies ist in Figur 1B erkennbar. Beide Sitzflächen 111, 121 können sowohl gepolstert als auch ungepolstert oder auch unterschiedlich voneinander ausgeführt sein.

Die Drehung der ausfahrbaren Sitzfläche 121 erfolgt beispielsweise durch einen von dem Fahrer des Fahrzeugs oder der Leitstelle ausgelösten Steuerbefehl. Der Antrieb (hier nicht dargestellt) kann durch einen elektrischen Stellmotor oder einen pneumatischen Antriebszylinder erfolgen.

Zusätzlich zur Sitzfläche 121 schwenkt gleichzeitig eine schmale Rückenlehne 113 aus, um so eine Rückenabstützung oder Rückenlehne 212 für einen Fahrgast zu bilden, der auf der ausgeschwenkten Sitzfläche 121 sitzt. Dies ist beispielsweise in Figur 1C erkennbar. Im eingeschwenkten Zustand bildet diese Rückenlehne 212 die seitliche Armstütze 113 des ersten Sitzes, der auch als feststehender Sitz bezeichnet werden kann. Der zweite Sitz kann dagegen als bewegbarer Sitz bezeichnet werden.

Der zweite Sitz kann, beispielsweise zentral gesteuert, zwei Positionen einnehmen. Die erste Position ist in Figur 1A gezeigt. In dieser Position befindet sich die Sitzfläche 121 des zweiten Sitzes unterhalb der Sitzfläche 111 des ersten Sitzes und ist dort verstaut. Die zweite Position ist in Figur 1B gezeigt. Dort ist die Sitzfläche 121 des zweiten Sitzes seitlich um die vertikale Achse 130 herausgeschwenkt. Zusammen mit der Sitzfläche 121 des zweiten Sitzes wird die Armlehne 113 verschwenkt.

Die Sitzfläche 121 des zweiten Sitzes hat in dieser Ausführungsform eine viertelkreisförmige Sitzfläche, und wird etwa um den geometrischen Mittelpunkt des Kreises gedreht. Dadurch kann die Sitzfläche 121 gleichmäßig unter die Sitzfläche 111 ein- und ausgeschwenkt werden.

Der zweite Sitz mit der ausschwenkbaren Sitzfläche 121 kann sowohl als abgestützter Sitz mit Bodenabstützung der Schwenkachse 130, beispielsweise wie in den Figuren 1A und 1B gezeigt, ausgeführt sein als auch als seitlich aufgehängter Sitz ohne Bodenabstützung. Die Schwenkachse 130 stützt sich beispielsweise auf einen Fuß 140 der Fahrgastsitzeinrichtung 100 und ist in diesem geführt. Figur 1C zeigt exemplarisch, wie ein Fahrgast auf der Sitzfläche 121 Platz genommen hat.

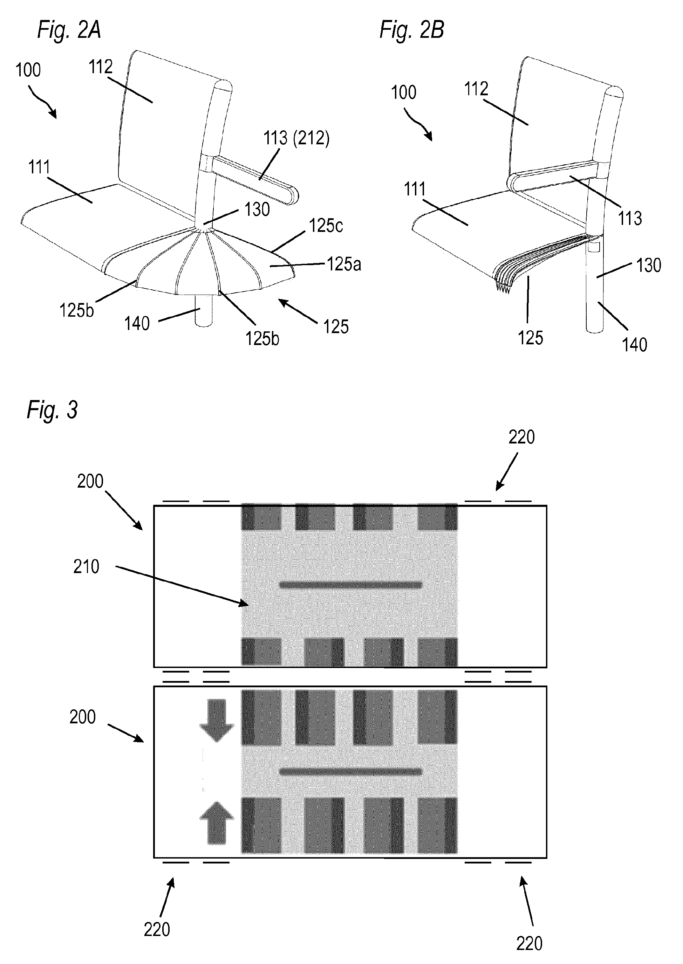

Eine weitere Ausführungsform der Fahrgastsitzeinrichtung zeigen Figuren 2A und 2B. Eine ausschwenkbare faltbare Sitzfläche 125 wird hier in einer fächerartigen Konstruktion ausgeführt. Eine geeignete Zahl von Fächerstäben 125b, 125c bildet zusammen mit einem geeigneten flexiblen, beispielsweise textilen Material 125a die Sitzfläche 125. Es genügt, wenn lediglich der äußere Fächerstab 125c durch den Antrieb bewegt wird, während die anderen Fächerstäbe 125b passiv durch Zug des textilen Materials 125a beim Ausschwenken des äußeren Fächerstabs 125 bewegt werden. Fächerstäbe 125b und 125c sind mit dem textilen Material 125a geeignet verbunden, beispielsweise in dem die Fächerstäbe 125b, 125c in Schlaufen oder Taschen des textilen Materials 125a eingreifen. Der angetriebene Fächerstab 125c wird in die Endlage bewegt und spannt dabei die textile Sitzfläche 125 auf. Eine optionale Verriegelung stellt sicher, dass eine ausreichend gespannte Sitzfläche entsteht. Durch die aufgespannte Textilfläche und die Fächerstäbe verbleibt eine gewisse Elastizität, die wie eine Sitzpolsterung wirkt. Im eingefahrenen Zustand (Figur 2B) faltet sich die textile Sitzfläche 125 zusammen und bildet den Rand der festen Sitzfläche 111 des ersten Sitzes. Die schwenkbare Rückenlehne 212 kann in gleicher Weise ausgeführt werden, wie vorher beschrieben.

Das flexible Material, das insbesondere ein textiles Material 125a ist, sollte bevorzugt reißfest sein, um die Belastungen bei der Benutzung aufzunehmen. Geeignete textile Materialien sind grob- oder feinmaschig gewebte Kunstfasertextilien.

Die Fächerstäbe 125b und 125c sind einseitig um die Schwenkachse 130 drehbar gelagert und leiten die durch die Benutzung durch einen Fahrgast auftretenden Kräfte in die Schwenkachse 130 ein. Bevorzugt bestehen die Fächerstäbe aus geformten Federstahlstäben, aus Faserverbundwerkstoffen oder Aluminiumgussteilen oder Aluminiumformteilen.

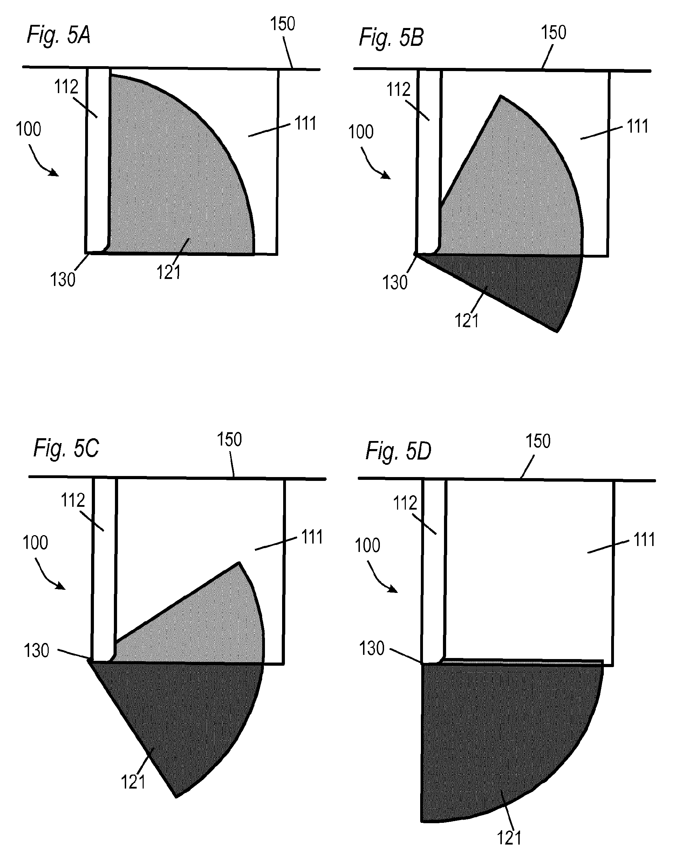

Verschiedene Stadien des Ein- und Ausschwenkens sind in den Figuren 5A bis 5D gezeigt, welche eine schematische Draufsicht auf eine Fahrgastsitzeinrichtung zeigt, die über eine schwenkbar gelagerte feste viertelkreisförmige Sitzfläche verfügt, wie etwa in Figuren 1A und 1B gezeigt. Die Fahrgastsitzeinrichtung ist beispielsweise an der Innenwand 150 des Schienenfahrzeugs moniert, so dass die drehbare Sitzfläche 121 seitlich zur Wagenmitte herausgeschwenkt werden kann. In der ersten Position (Figur 5A) ist die drehbare Sitzfläche 121 vollständig unterhalb der Sitzfläche 111 des ersten Sitzes verstaut, so dass die Fahrgastsitzeinrichtung 100 in diesem Zustand lediglich die Fläche eines einzelnen Sitzplatzes in Anspruch nimmt. Durch Drehung um die hier senkrecht zur Zeichnungsebene verlaufende Schwenkachse 130 wird die Sitzfläche 121 zunehmend herausgeschwenkt und bis in die vollständig ausgeschwenkte Position (Drehung um 90°) geführt (Figur 5D). Dabei kann die Sitzfläche 121 seitlich einen leichten Überlapp mit der Sitzfläche 111 beibehalten.

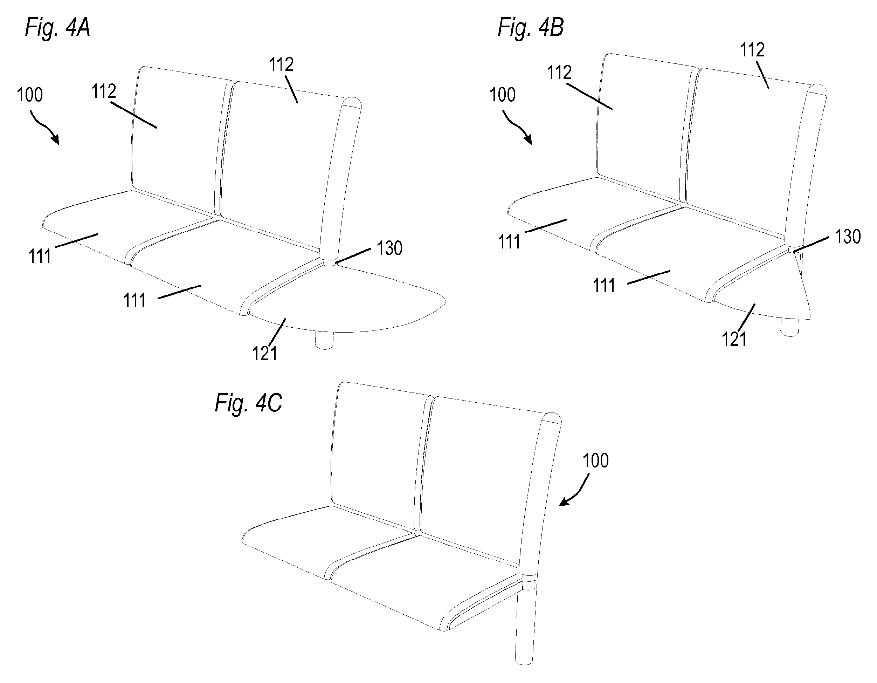

Die rotierend oder drehbar ausfahrbaren Sitzflächen 121 können auch bei Doppelsitzen ausgeführt werden. Diese weisen dann jeweils zwei erste Sitze mit feststehender Sitzfläche 111 und Rückenlehne 112 auf. Dies ist in den Figuren 4A bis 4C gezeigt.

Bei Verzicht auf die schwenkbare Armlehne bzw. Rückenlehne, wie in Figuren 4A bis 4C gezeigt, wird der Schwenksitz von dem Fahrgast wie eine Art Hocker verwendet.

Die schwenkbaren Sitzflächen können auch bei längs angebrachten Sitzen oder Sitzbänken eingesetzt werden, wobei diese an den jeweiligen Enden angeordnet sind.

Auf Basis geeigneter Informationen zum erwarteten Fahrgastaufkommen erfolgt zentral das Ein- oder Ausfahren der Sitzflächen durch den Fahrer oder die Leitstelle, wenn das Fahrzeug leer ist, d.h. in der Regel während der Zugwendung oder Richtungsumkehr. Figur 3 zeigt dazu in Draufsicht schematisch einen Ausschnitt eines Fahrgastraums 210 eines Schienenfahrzeugs 200. Die Lage der Zugangstüren 220 ist angedeutet.

Die schwenkbaren Sitze können bei Querbestuhlung, wie in Figur 3 gezeigt, an allen Sitzen zur Mittelgangseite hin eingesetzt werden. Besondere Vorteile ergeben sich, wenn im Fall einer teilweisen Ausrüstung des Fahrzeuges vorzugsweise die jeweils unmittelbar an den Türeingangsbereich 220 angrenzende Sitzreihe mit einer Fahrgastsitzeinrichtung ausgerüstet wird. Neben der Veränderung des Verhältnisses von Steh- zu Sitzplätzen führt das Einfahren der Sitzfläche bei hohem Fahrgastaufkommen zu einer Verbesserung des Fahrgastflusses während der Haltezeit, da sich die Fahrgäste durch den breiteren Anfang des Mittelganges leichter in den Bereich zwischen den Türen verteilen können. Dies kann die Haltezeit insgesamt verringern, da der Ein- und Aussteigevorgang beschleunigt wird.

Die vorstehend beschriebenen Ausführungsformen können beliebig miteinander kombiniert werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 100: Fahrgastsitzeinrichtung
- 111: Sitzfläche des ersten Sitzes
- 112: Rückenlehne
- 113: Armlehne
- 121, 125: Sitzfläche des zweiten Sitzes
- 125a, 125c: Fächerstäbe
- 125b: textiles material
- 130: Schwenkachse
- 140: Fuß der Fahrgastsitzeinrichtung
- 150: Innenwand
- 200: Schienenfahrzeug
- 210: Fahrgastraum
- 220: Zugangstür
- 212: Rückenlehne / Rückenabstützung

## Patentansprüche

1. Fahrgastsitzeinrichtung für Fahrzeuge, insbesondere Schienenfahrzeuge, mit mindestens einem fest im Fahrzeug montierbaren ersten Sitz (111, 112) und mindestens einem relativ zum ersten Sitz (111, 112) bewegbaren zweiten Sitz (121), der mit dem ersten Sitz (111, 112) verbunden ist,
wobei der zweite Sitz (121) um eine etwa senkrecht verlaufende Schwenkachse (130) relativ zum ersten Sitz (111, 112) zwischen einer ersten Position, in welcher der zweite Sitz (121) im Bereich des ersten Sitzes (111, 112) verstaubar ist, und einer zweiten Position, in welcher der zweite Sitz (121) zur Benutzung durch einen Fahrgast zur Verfügung steht, schwenkbar ist,
**dadurch gekennzeichnet, dass** der zweite Sitz eine Sitzfläche (121) umfasst, welche in ihrer Ebene um die Schwenkachse (130) ein- und ausschwenkbar ist.

2. Fahrgastsitzeinrichtung nach Anspruch 1, **dadurch gekennzeichnet, dass** sie ein Antriebsmittel umfasst, um den zweiten Sitz (121) zwischen der ersten und zweiten Position hin- und her zu bewegen.

3. Fahrgastsitzeinrichtung nach Anspruch 1 oder 2, **dadurch gekennzeichnet, dass** die Sitzfläche (121) des zweiten Sitzes eine Form eines Viertelkreises hat.

4. Fahrgastsitzeinrichtung nach Anspruch 3, **dadurch gekennzeichnet, dass** der erste Sitz (111, 112) über eine Armlehne (113) verfügt, die zusammen mit der Sitzfläche (121) des zweiten Sitzes verschwenkbar ist, wobei die Armlehne (113) die Funktion einer Rückenlehne (212) des zweiten Sitzes übernimmt, wenn die Sitzfläche (121) des zweiten Sitzes ausgeschwenkt ist.

5. Fahrgastsitzeinrichtung nach einem der vorherigen Ansprüche, **dadurch gekennzeichnet, dass** der zweite Sitz (121) in der ersten Position unterhalb des ersten Sitzes (111), im ersten Sitz oder am ersten Sitz eingeschwenkt ist.

6. Fahrgastsitzeinrichtung nach einem der vorherigen Ansprüche, **dadurch gekennzeichnet, dass** die Schwenkachse (130) seitlich der Rückenlehne (112) des ersten Sitzes (111,112) angeordnet ist.

7. Fahrgastsitzeinrichtung nach einem der vorherigen Ansprüche, **dadurch gekennzeichnet, dass** sich die Schwenkachse (130) im eingebauten Zustand der Fahrgastsitzeinrichtung am Boden des Schienenfahrzeugs (200) abstützt.

8. Fahrgastsitzeinrichtung nach einem der vorherigen Ansprüche, **dadurch gekennzeichnet, dass** die Sitzfläche (121) des zweiten Sitzes in der zweiten Position eine tiefere Sitzposition als die Sitzfläche (111) des ersten Sitzes bietet.

9. Fahrgastsitzeinrichtung nach einem der vorherigen Ansprüche, **dadurch gekennzeichnet, dass** der zweite Sitz einen fächerartigen Aufbau aufweist, sodass dessen Sitzfläche (215) in der zweiten Position von der aufgespannten fächerartigen Konstruktion gebildet wird.

10. Fahrgastsitzeinrichtung nach Anspruch 9, **dadurch gekennzeichnet, dass** die fächerartige Konstruktion eine Vielzahl von Fächerstäben (125a, 125c), die um die Schwenkachse (130) schwenkbar sind, und ein flexibles, insbesondere textiles, Material (125b) aufweist, das von den in die zweite Position ausgeschwenkten Fächerstäben zur Bildung der Sitzfläche (125) des zweiten Sitzes aufgespannt wird.

11. Schienenfahrzeug, **dadurch gekennzeichnet, dass** es mindestens eine Fahrgastsitzeinrichtung (100) nach einem der vorherigen Ansprüche umfasst, die mit ihrem ersten Sitz fest im Schienenfahrzeug (200) montiert ist.

12. Schienenfahrzeug nach Anspruch 11, **dadurch gekennzeichnet, dass** es mehrere Fahrgastsitzeinrichtungen (100) umfasst, die so im Schienenfahrzeug (200) montiert sind, dass sie Sitzpositionen quer zur Längsrichtung des Schienenfahrzeugs (200) ermöglichen, wobei die zweiten Sitzplätze der Fahrgastsitzeinrichtungen (100) jeweils zur Mitte des Schienenfahrzeugs (200) ausschwenkbar sind.

13. Schienenfahrzeug nach Anspruch 12, **dadurch gekennzeichnet, dass** die Fahrgastsitzeinrichtungen (100) benachbart zu Zugangstüren (220) des Schienenfahrzeugs (200) angeordnet sind, wobei das Schienenfahrzeug (200) optional weitere Fahrgastsitzeinrichtungen aufweist, die zwei starr miteinander verbundene Sitzplätze aufweisen und von den Zugangstüren entfernt angeordnet sind.

14. Schienenfahrzeug nach einem der Ansprüche 11 bis 13, **dadurch gekennzeichnet, dass** die Antriebsmittel der Fahrgastsitzeinrichtungen zentral ansteuerbar sind.

15. Verfahren zur Anpassung des Sitzplatzangebots eines Schienenfahrzeugs, wobei bei einem Schienenfahrzeug nach einem der Ansprüche 11 bis 14 durch ein vom Fahrer des Schienenfahrzeugs oder von einer Leitstelle ausgegebenes Signal alle oder nur ein Teil der zweiten Sitze der Fahrgastsitzeinrichtungen von der ersten in die zweite Position oder von der zweiten in die erste Position zur Anpassung des Sitzplatzangebots verschwenkt werden, wobei die Sitzfläche (121) des zweiten Sitzes in ihrer Ebene um die Schwenkachse (130) ein- und ausgeschwenkt wird.

## Claims

1. Passenger seat arrangement for vehicles, in particular rail vehicles, with at least one first seat (111, 112) which can be mounted fixed in the vehicle, and at least one second seat (121) which is moveable relative to the first seat (111, 112) and connected with the first seat (111, 112),
wherein the second seat (121) can be swivelled relative to the first seat (111, 112) about a swivelling axis (130) running roughly vertically, between a first position in which the second seat (121) can be stowed in the region of the first seat (111, 112), and a second position in which the second seat (121) is available for use by a passenger,
**characterised in that** the second seat comprises a seat surface (121) which can be swivelled in and out in its plane about the swivelling axis (130).

2. Passenger seat arrangement according to claim 1, **characterised in that** it comprises a driving means in order to move the second seat (121) to and fro between the first and the second position.

3. Passenger seat arrangement according to claim 1 or 2, **characterised in that** the seat surface (121) of the second seat has a shape of a quarter circle.

4. Passenger seat arrangement according to claim 3, **characterised in that** the first seat (111, 112) has an armrest (113) which can be swivelled together with the seat surface (121) of the second seat, wherein the armrest (113) performs the function of a backrest (212) of the second seat when the seat surface (121) of the second seat is swivelled out.

5. Passenger seat arrangement according to one of the preceding claims, **characterised in that** in the first position the second seat (121) is swivelled in underneath the first seat (111), in the first seat or on the first seat.

6. Passenger seat arrangement according to one of the preceding claims, **characterised in that** the swivelling axis (130) is arranged to the side of the backrest (112) of the first seat (111, 112).

7. Passenger seat arrangement according to one of the preceding claims, **characterised in that** when the passenger seat arrangement is installed, the swivelling axis (130) bears on the floor of the rail vehicle (200).

8. Passenger seat arrangement according to one of the preceding claims, **characterised in that** in the second position the seat surface (121) of the second seat offers a lower sitting position than the seat surface (111) of the first seat.

9. Passenger seat arrangement according to one of the preceding claims, **characterised in that** the second seat exhibits a fanlike structure so that its seat surface (215) is formed by the extended fanlike structure in the second position.

10. Passenger seat arrangement according to claim 9, **characterised in that** the fanlike structure exhibits a multiplicity of fan bars (125a, 125c) which are able to swivel about the swivelling axis (130), and a flexible, in particular textile, material (125b) which is extended by the fan bars swivelled out into the second position to form the seat surface (125) of the second seat.

11. Rail vehicle, **characterised in that** it comprises at least one passenger seat arrangement (100) according to one of the preceding claims, which is mounted with its first seat fixed in the rail vehicle (200).

12. Rail vehicle according to claim 11, **characterised in that** it comprises a plurality of passenger seat arrangements (100) which are mounted in the rail vehicle (200) so that they allow sitting positions transversely to the longitudinal direction of the rail vehicle (200), wherein the second seats of the passenger seat arrangements (100) can each be swivelled out towards the middle of the rail vehicle (200).

13. Rail vehicle according to claim 12, **characterised in that** the passenger seat arrangements (100) are arranged adjacent to access doors (220) of the rail vehicle (200), wherein the rail vehicle (200) optionally exhibits further passenger seat arrangements which exhibit seats which are connected with one another rigidly and arranged distant from the access doors.

14. Rail vehicle according to one of claims 11 to 13, **characterised in that** the driving means of the passenger seat arrangements can be actuated centrally.

15. Method of adjusting the number of seats offered by a rail vehicle, wherein in a rail vehicle according to one of claims 11 to 14, all or only a part of the second seats of the passenger seat arrangements are swivelled from the first into the second position or from the second into the first position to adjust the number of seats offered by a signal issued by the driver of the rail vehicle or by a control centre, wherein the seat surface (121) of the second seat is swivelled in or out in its plane about the swivelling axis (130).

## Revendications

1. Dispositif de siège de passagers pour véhicules, en particulier véhicules ferroviaires, ayant au moins un premier siège (111, 112) pouvant être monté de façon fixe dans le véhicule et au moins un deuxième siège (121) pouvant être déplacé par rapport au premier siège (111, 112), avec lequel le premier siège (111, 112) est relié,
le deuxième siège (121) pouvant pivoter autour d'un axe de pivotement s'étendant sensiblement à la verticale (130) par rapport au premier siège (111, 112) entre une première position, dans laquelle le deuxième siège (121) peut être rangé dans la zone du premier siège (111, 112), et une deuxième position, dans laquelle le deuxième siège (121) est disponible pour être utilisé par un passager,
**caractérisé en ce que** le deuxième siège comprend une surface d'assise (121) que l'on peut faire pivoter vers l'intérieur et vers l'extérieur dans son plan autour de l'axe de pivotement (130).

2. Dispositif de siège de passagers selon la revendication 1, **caractérisé en ce qu'**il comprend un moyen d'entraînement pour déplacer le deuxième siège (121) entre la première et la deuxième position dans les deux sens.

3. Dispositif de siège de passagers selon la revendication 1 ou 2, **caractérisé en ce que** la surface d'assise (121) du deuxième siège a une forme de quart de disque.

4. Dispositif de siège de passagers selon la revendication 3, **caractérisé en ce que** le premier siège (111, 112) dispose d'un accoudoir (113) qui peut basculer avec la surface d'assise (121) du deuxième siège, l'accoudoir (113) exerçant la fonction d'un dossier (212) du deuxième siège lorsque la surface d'assise (121) du deuxième siège est pivotée vers l'extérieur.

5. Dispositif de siège de passagers selon l'une des revendications précédentes, **caractérisé en ce que** dans la première position, le deuxième siège (121) est pivoté vers l'intérieur en dessous du premier siège (111), dans le premier siège ou sur le premier siège.

6. Dispositif de siège de passagers selon l'une des revendications précédentes, **caractérisé en ce que** l'axe de pivotement (130) est agencé latéralement par rapport au dossier (112) du premier siège (111, 112).

7. Dispositif de siège de passagers selon l'une des revendications précédentes, **caractérisé en ce que** dans l'état monté du dispositif de siège de passagers, l'axe de pivotement (130) prend appui sur le plancher du véhicule ferroviaire (200).

8. Dispositif de siège de passagers selon l'une des revendications précédentes, **caractérisé en ce que** dans la deuxième position, la surface d'assise (121) du deuxième siège présente une position d'assise plus basse que la surface d'assise (111) du premier siège.

9. Dispositif de siège de passagers selon l'une des revendications précédentes, **caractérisé en ce que** le deuxième siège présente une structure en éventail, de telle sorte que dans la deuxième position, sa surface d'assise est formée par la construction en éventail déployée.

10. Dispositif de siège de passagers selon la revendication 9, **caractérisé en ce que** la construction en éventail présente une pluralité de lamelles d'éventail (125, 125c) qui peuvent pivoter autour de l'axe de pivotement (130) et un matériau flexible, en particulier textile (125b), qui est déployé par les lamelles d'éventail pivotées vers l'extérieur dans la deuxième position pour former la surface d'assise (125) du deuxième siège.

11. Véhicule ferroviaire, **caractérisé en ce qu'**il comprend au moins un dispositif de siège de passagers (100) selon l'une des revendications précédentes, qui est monté avec son premier siège de façon fixe dans le véhicule ferroviaire (200).

12. Véhicule ferroviaire selon la revendication 11, **caractérisé en ce qu'**il comprend plusieurs dispositifs de siège de passagers (100) qui sont montés dans le véhicule ferroviaire (200) de telle sorte qu'ils permettent des positions d'assise transversalement à la direction longitudinale du véhicule ferroviaire (200), les deuxièmes places assises des dispositifs de siège de passagers (100) pouvant chacune être déployées vers le milieu du véhicule ferroviaire (200).

13. Véhicule ferroviaire selon la revendication 12, **caractérisé en ce que** les dispositifs de siège de passagers (100) sont agencés de façon adjacente à des portes d'accès (220) du véhicule ferroviaire (200), le véhicule ferroviaire (200) présentant le cas échéant des dispositifs de siège de passagers supplémentaires qui présentent deux places assises reliées de façon fixe l'une avec l'autre et sont agencés à distance des portes d'accès.

14. Véhicule ferroviaire selon l'une des revendications 11 à 13, **caractérisé en ce que** les moyens d'entraînement des dispositifs de siège de passagers peuvent être actionnés de façon centralisée.

15. Procédé destiné à adapter l'offre de places assises d'un véhicule ferroviaire, dans lequel dans un véhicule ferroviaire selon l'une des revendications 11 à 14, on peut faire pivoter la totalité ou une partie seulement des deuxièmes sièges des dispositifs de siège de passagers de la première à la deuxième position ou de la deuxième à la première position, au moyen d'un signal émis par le conducteur du véhicule ferroviaire ou par un poste de commande, pour adapter l'offre de places assises, la surface d'assise (121) du deuxième siège étant entraînée en pivotement vers l'intérieur et vers l'extérieur dans son plan autour de l'axe de pivotement (130).
